# EUROPEAN PATENT SPECIFICATION

(11) **EP 1 477 813 B1**
(45) Date of publication and mention of the grant of the patent: **02.01.2008**
(21) Application number: 03252959.6
(22) Date of filing: 13.05.2003
(51) Int. Cl.: G01N 35/04

(54) **Vial transfer apparatus**
Übertragungsgerät für Fläschen
Appareil pour transférer des flacons

(43) Date of publication of application: 17.11.2004
(73) Proprietor: The Automation Partnership (Cambridge) Limited, Royston, Hertfordshire SG8 5WY (GB)
(72) Inventor: Smith, Philip Russell James, Cambridge (GB)
(74) Representative: Brunner, Michael John

(56) References cited:
- EP-A- 0 571 032
- EP-A- 0 684 478
- EP-A- 1 037 050
- WO-A-01/54817
- US-A- 3 322 958
- US-A- 4 595 562

## Description

The present invention relates to an apparatus for transferring a vial of fluid material to or from a storage plate containing a number of vials, for example for use in a biological or chemical assay or similar process.

In biological and chemical assay processes and systems which operate with vials of biological or chemical material usually held in suspension or solution within a fluid in vials, the vials have to be moved around so that materials can be inserted into and removed from the vials as well as the vials being visually inspected and, conventionally, large numbers of vials are held in storage plates and transferred individually to and from the respective storage plates.

EP-A-0571032 discloses an analyser incubator which utilises two independently driven concentric incubator rings. Each ring supports and transports cuvettes containing samples between processing stations of the analyser. The motion of the cuvettes into and out of the two concentric rings is instigated by an arm which pulls the cuvettes from the ring by moving them radially inwardly or outwardly of the ring. This mechanism is limited to use within one set of incubator rings as the motion must be radially inwardly or outwardly relative to the axis of rotation of the incubator rings. Furthermore, the method of disengaging the cuvettes from the incubator ring, namely forcing the cuvette radially inwardly by applying a force to the upper side portion of the cuvette, relies heavily on the shape of the cuvette and inherently requires an individually formed cuvette with tapered sides. Furthermore, this method of disengaging cuvettes from incubator rings inherently involves a given degree of tipping of the cuvette during disengagement from the incubator ring. This can cause the contents of the cuvette to spill and may result in cross-contamination between samples and partial loss of samples.

EP-A-1037050 discloses a series of three interconnected drums that make up a diagnostic measuring device. The three drums overlap and a series of plungers allow samples cup cassettes to be pushed vertically from one drum into another.

WO 01/54817 discloses an automatic biological analysis apparatus using cuvettes and means for transferring the cuvettes inside such an apparatus. A series of stacked carousels and a transfer method are disclosed whereby a transfer fork pushes a cuvette between indexed positions on the various stacked carousels.

It is increasing necessary to process a large number of samples and, in all of the above described systems, the number of samples is strictly limited by the size of the carousels, drums or incubator rings. The aim of the present invention is to increase the number of samples that can be dealt with by a single transfer device. In particular, the plunger and closed path conveyer of the present invention are capable of movement in the x-y plane relative to the supported vials. This enables the transfer device to move between different sets of vials thereby reducing the amount of equipment required for dealing with a given number of samples.

A further system requirement is that the vials be examined by means of a bar code or dot code reader. When the transfer apparatus has access to a large number of samples a "pick and place" robot removes a vial from an associated plate to a code reader and after the code has been read, moves the vial back to a storage plate or else to a different location. As a result of the large number of vials that can be accessed by the transfer apparatus, the move to and from the code reader takes a relatively long time.

According to the present invention there is provided apparatus for transferring a vial of fluid material to or from a storage plate containing a number of vials, the apparatus comprising:
a first plunger disposed on one side of a storage plate support, in use, and movable axially into engagement with a vial held in use in a storage plate on the support to move the vial out of the storage plate in the direction away from the support on the other side of the support, and
a closed path conveyor having one or more slots to receive a vial, selectively alignable with the axis of the first plunger; and characterised in that the first plunger and the conveyor are movable parallel to the plane of the storage plate support, in use, to plural locations to allow the plunger to align with a given vial held in the storage plate.

The apparatus may further comprise a second plunger disposed, in use, on the other side of the conveyor and the support from the first plunger and movable axially into engagement with a vial held in use in a slot in the conveyor to move the vial out of the conveyor.

Preferably, the second plunger is disposed in axial alignment with the first plunger for moving a vial back from the conveyor into a storage plate.

Preferably, the closed path conveyor has an axis of rotation at an angle to the axis of the first plunger and wherein the slots for receiving the vials are disposed at the same angle to the axis of the conveyor.

Advantageously, the conveyor is a wheel.

Preferably, the apparatus further comprises a plate support.

The first plunger and the conveyor are preferably movable parallel to the plate support to plural locations to allow the plunger to align with a given vial held in the support plate, together with the second plunger.

An optical code reader may be mounted to scan a vial disposed in the or each slot as the conveyor rotates and a mirror may be disposed adjacent the conveyor to allow remote inspection of the vials held in the slots in the conveyor by the optical code reader.

Such a transfer apparatus has a considerable benefit over prior art devices in the speed of operation. By providing multiple slots in the conveyor, the first plunger can move plural vials from the storage plate into the conveyor, in quick succession, moving only small distances (the distance between adjacent vial positions in the support plate) between each operation.

By mounting the code reader remote from the conveyor and utilising a mirror disposed adjacent the conveyor, remote reading of the codes on the vials can be achieved from positions on the conveyor wheel remote from the axis of the plungers, so that the code on a given vial can be read while a second vial is being removed from or inserted into the storage plate.

Of course, the second plunger could be disposed out of alignment with the first plunger so as to provide a mechanism for transferring vials on the conveyor wheel to a further conveyor or further plate for onward further processing.

Conventionally, a batch of vials is selectively removed from the storage plate for further processing and then a new batch of vials is inserted into the plate as a separate process. With the apparatus of the present invention there are speed benefits from combining the removal and insertion processes. For example, if the conveyor has 13 slots for vials then up to 12 of the slots could be filled in quick succession with new vials being placed into the conveyor from an input carrier plate, the transfer apparatus then moving the conveyor to the location of a vial to be removed from the storage plate and that vial being moved into the 13th space in the conveyor, so that the conveyor can then be rotated and a new vial inserted into the storage location in the storage plate just vacated by the vial last removed from the storage plate into the conveyor. This "swapping" process can then be continued on the remaining new vials in the conveyor and once all of the vials have been swapped the conveyor wheel can be moved to an output carried plate and the vials placed into the carried plate in quick succession.

It is envisaged that the conveyor could include slots of different sizes so as to enable vials of different sizes to be selectively retained and transferred by the conveyor wheel in systems which operate using vials of different sizes for different purposes.

One example of an apparatus according to the present invention will now be described with reference to the accompanying diagrammatic side elevation of the apparatus.

The transfer apparatus 1 has a support 2 defining the location of a storage plate 3 which contains a plurality of vials 4 disposed closely adjacent one another in a grid-like array. The support 2 holds the lower edges of the plate 3 providing access through the bottom of the plate for a first plunger 5 which has a drive mechanism 6 allowing the plunger 5 to move upwardly and downwardly into and out of engagement with selected vials 4 in the plate 3. The plunger 5 is movable in the plane of the support 2 by a suitable x-y drive mechanism (not shown) so as to be capable of engaging with any vial held in the plate. In this example of the present invention the plunger 5 engages with the vial 4 merely by abutting the lower part of the vial 4 and applying a force in an upward direction. Alternatively a gripping means mounted on the plunger 5 may be used to engage with the vial 4 for improved stability.

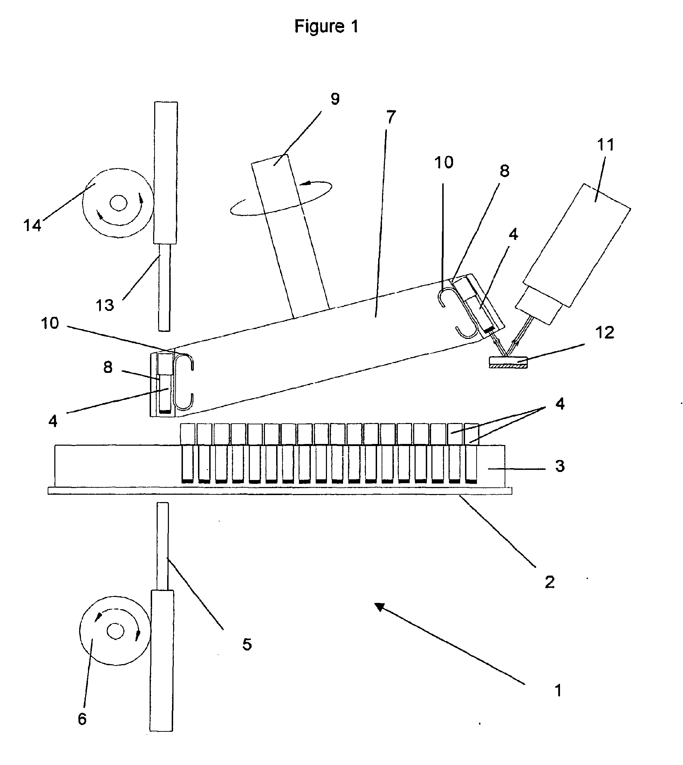

Above the support 2 and the vial-carrying storage plate 3, there is disposed a closed path conveyor in the form of a wheel 7 which contains a series of slots or bores 8 around its periphery. The rotary axis 9 of the wheel is disposed an angle α to the axis of the plunger 5 and the slots 8 are disposed at the same angle α to the rotary axis 9 so that each slot can, in turn, be aligned with the plunger 5 and a vial 4 held in the storage plate 3. In the figure a vial 4 is shown held in a slot 8 in alignment with the plunger 5, having been moved into the slot 8 by operation of the plunger 5 upwardly as shown in the drawing. The vials 4 are held in the slots 8 by a suitable C-shaped spring 10 on one side of the slot 8.

At a suitable position, in the present example substantially diametrically opposed to the axis of the plunger 5 about the rotary axis 9, an optical code on the bottom of a vial 4 can be read by means of a code reader 11 which views the bottom of the vial 4 via a mirror 12.

Disposed above the conveyor wheel 7 is a second plunger 13, substantially identical to the first plunger 5 and driven by a corresponding drive mechanism 14. The axis of the plunger 13 is aligned with the axis of the plunger 5 and the plunger 13 can be operated to push a vial 4 from the conveyor wheel 7 back into a location in the storage plate 3.

It will be appreciated, that additional plungers could be disposed for engagement with vials held in the conveyor wheel 7 at different positions, so that transfer to a second mechanism out of the conveyor wheel can be achieved if desired. However, by mounting the first and second plungers 5,13 and the conveyor wheel on a common carriage for movement by the x-y drive mechanism (not shown) parallel to the plane of the storage plate 3, and allowing the components to be moved together to a further location and a separate storage plate, vials can be moved into and out of desired locations quickly, by loading the transfer wheel at one location and emptying it at another, avoiding the need for additional plungers to remove vials from the transfer wheel.

If desired, the storage plates 3 may themselves be put on appropriate conveyors so as to be movable into and out of desired locations within the particular system within which the transfer apparatus is located.

## Claims

1. Apparatus (1) for transferring a vial of fluid material to or from a storage plate (3) containing a number of vials, the apparatus comprising:
a first plunger (5) disposed on one side of a storage plate support (2), in use, and movable axially into engagement with a vial (4) held, in use, in a storage plate (3) on the support (2) to move the vial out of the storage plate (3) in the direction away from the support (2) on the other side of the support (2)
a closed path conveyor (7) having one or more slots (8) to receive a vial (4), selectively alignable with the axis of the first plunger (5); and **characterised in that**
the first plunger (5) and the conveyor (7) are movable parallel to the plane of the storage plate support (2), in use, to plural locations to allow the plunger (5) to align with a given vial (4) held in the storage plate (3).

2. Apparatus (1) according to claim 1, further comprising a second plunger (13) disposed, in use, on the other side of the conveyor (7) and the support (2) from the first plunger (5) and movable axially into engagement with a vial (4) held, in use, in a slot (8) in the conveyor (7) to move the vial (4) out of the conveyor (7).

3. Apparatus (1) according to claim 1 or claim 2, wherein the second plunger (13) is disposed in axial alignment with the first plunger (5) for moving a vial back from the conveyor (7) into a storage plate (3).

4. Apparatus(1) according to any of claims 1 to 3, wherein the closed path conveyor (7) has an axis of rotation at an angle to the axis of the first plunger (5) and wherein the slots (8) for receiving the vials (4) are disposed at the same angle to the axis of the conveyor (7).

5. Apparatus (1) according to any of claims 1 to 4, wherein the conveyor (7) is a wheel.

6. Apparatus (1) according to any of claims 1 to 5, further including a plate support (2).

7. Apparatus (1) according to any of claims 1 to 6, wherein the second plunger (13) is movable parallel to the plate (3) to plural locations to allow the plunger (13) to align with a given vial (4) held in the support plate (3).

8. Apparatus (1) according to any of claims 1 to 7, further including an optical code reader (11) mounted to scan a vial (4) disposed in the or each slot (8) as the conveyor (7) rotates.

9. Apparatus (1) according to claim 8, further including a mirror (12) disposed adjacent the conveyor (7) to allow remote inspection of the vials (4) held in the slots (8) in the conveyor (7) by the optical code reader (11).

## Patentansprüche

1. Vorrichtung (1) zum Überführen eines (Labor-) Probengläschens oder -fläschchens mit Fluidmaterial von einer Lagerplatte (3), enthaltend eine Anzahl Probengläschen, oder an dieselbe, wobei die Vorrichtung umfasst:
einen ersten Kolben (5), der im Betrieb an einer Seite eines Lagerplattenträgers (2) angeordnet und axial in Eingriff mit einem Probengläschen (4) bewegbar ist, das im Betrieb in einer Lagerplatte (3) an dem Träger (2) gehalten ist, um das Probengläschen auf der anderen Seite des Trägers (2) aus der Lagerplatte (3) in der Richtung von dem Träger (2) weg zu bewegen,
einen Endlosförderer (7) mit einem oder mehreren Schlitzen (8) zur Aufnahme eines Probengläschens (4), das wahlweise mit der Achse des ersten Kolbens (5) ausrichtbar ist; und
**dadurch gekennzeichnet ist, dass**
der erste Kolben (5) und der Förderer (7) im Betrieb parallel zur Ebene des Lagerplattenträgers (2) an mehrere Stellen bewegbar sind, damit sich der Kolben (5) mit einem vorgegebenen Probengläschen (4), das in der Lagerplatte (3) gehalten ist, ausrichten kann.

2. Vorrichtung (1) nach Anspruch 1, weiter umfassend einen zweiten Kolben (13), der im Betrieb auf der anderen Seite des Förderers (7) und des Trägers (2) von dem ersten Kolben (5) angeordnet und axial in Eingriff mit einem Probengläschen (4) bewegbar ist, das im Betrieb in einem Schlitz (8) in dem Förderer (7) gehalten ist, um das Probengläschen (4) aus dem Förderer (7) heraus zu bewegen.

3. Vorrichtung (1) nach Anspruch 1 oder Anspruch 2, bei der sich der zweite Kolben (13) in axialer Ausrichtung mit dem ersten Kolben (5) befindet, um ein Probengläschen von dem Förderer (7) zurück in eine Lagerplatte (3) zu bewegen.

4. Vorrichtung (1) nach einem der Ansprüche 1 bis 3, bei der der Endlosförderer (7) eine Drehachse aufweist, die unter einem Winkel zur Achse des ersten Kolbens (5) liegt, und bei der die Schlitze (8) zur Aufnahme der Probengläschen (4) im gleichen Winkel zur Achse des Förderers (7) angeordnet sind.

5. Vorrichtung (1) nach einem der Ansprüche 1 bis 4, bei der der Förderer (7) ein Rad ist.

6. Vorrichtung (1) nach einem der Ansprüche 1 bis 5, weiter umfassend einen Plattenträger (2).

7. Vorrichtung (1) nach einem der Ansprüche 1 bis 6, bei der der zweite Kolben (13) parallel zu der Platte (3) an mehrere Stellen bewegbar ist, damit sich der Kolben (13) mit einem vorgegebenen Probengläschen (4), das in der Tragplatte (3) gehalten ist, ausrichten kann.

8. Vorrichtung (1) nach einem der Ansprüche 1 bis 7, weiter umfassend einen optischen Codeleser (11), der angebracht ist, um ein Probengläschen (4), das in dem oder jedem Schlitz (8) angeordnet ist, zu scannen, während sich der Förderer (7) dreht.

9. Vorrichtung (1) nach Anspruch 8, weiter umfassend einen Spiegel (12), der benachbart zu dem Förderer angeordnet ist, um durch den optischen Codeleser (11) eine aus der Entfernung erfolgende Beobachtung der Probengläschen (4), die in den Schlitzen (8) in dem Förderer (7) gehalten sind, zu ermöglichen.

## Revendications

1. Appareil (1) pour transférer un flacon de fluide en direction ou à partir d'une plaque de stockage (3) contenant plusieurs flacons, appareil comprenant :
un premier plongeur (5) disposé d'un côté d'un support d'une plaque de stockage (2), en utilisation, et mobile axialement en engagement avec un flacon (4) maintenu, en utilisation, dans une plaque de stockage (3) sur le support (2) pour déplacer le flacon en dehors de la plaque de stockage (3) dans une direction s'écartant du support (2) de l'autre côté du support (2) ;
un convoyeur en boucle fermée (7) comprenant une ou plusieurs fentes (8) pour recevoir un flacon (4) pouvant être alignées sélectivement avec l'axe du premier plongeur (5) ; et
**caractérisé en ce que** le premier plongeur (5) et le convoyeur (7) sont mobiles parallèlement au plan du support de plaque de stockage (2), en utilisation, vers plusieurs emplacements pour permettre au plongeur (5) de s'aligner avec un flacon donné (4) maintenu dans la plaque de stockage (3).

2. Appareil (1) selon la revendication 1, comprenant en outre un second plongeur (13) disposé, en utilisation, de l'autre côté du convoyeur (7) et du support (2) par rapport au premier plongeur (5) et mobile axialement en engagement avec un flacon (4) maintenu, en utilisation, dans une fente (8) du convoyeur (7) pour déplacer le flacon (4) en dehors du convoyeur (7).

3. Appareil (1) selon la revendication 1 ou 2, dans lequel le second plongeur (13) est disposé en alignement axial avec le premier plongeur (5) pour déplacer un flacon vers l'arrière à partir du convoyeur (7) dans la plaque de stockage (3).

4. Appareil (1) selon l'une quelconque des revendications 1 à 3, dans lequel le convoyeur en boucle fermée (7) a un axe de rotation incliné par rapport à l'axe du premier plongeur (5) et dans lequel les fentes (8) pour recevoir les flacons (4) sont disposées selon le même angle par rapport à l'axe du convoyeur (7).

5. Appareil (1) selon l'une quelconque des revendications 1 à 4, dans lequel le convoyeur (7) est une roue.

6. Appareil (1) selon l'une quelconque des revendications 1 à 5, comprenant en outre un support de plaque (2).

7. Appareil (1) selon l'une quelconque des revendications 1 à 6, dans lequel le second plongeur (13) est mobile parallèlement à la plaque (3) vers plusieurs emplacements pour permettre au plongeur (13) de s'aligner avec un flacon donné (4) porté dans la plaque de stockage (3).

8. Appareil (1) selon l'une quelconque des revendications 1 à 7, comprenant en outre un lecteur de code optique (11) monté pour balayer un flacon (4) disposé dans la fente (8) ou dans chaque fente tandis que le convoyeur (7) tourne.

9. Appareil (1) selon la revendication 8, comprenant en outre un miroir (12) disposé au voisinage du convoyeur (7) pour permettre une inspection à distance des flacons (4) portés dans les fentes (8) dans le convoyeur (7) par le lecteur de code optique (11).
